(19) Europäisches Patentamt
European Patent Office
Office européen des brevets

(11) Publication number: 0 384 138 A2

# (12) EUROPEAN PATENT APPLICATION

(21) Application number: 90101314.4

(22) Date of filing: 23.01.90

(51) Int. Cl.5: C08L 67/02, C08L 69/00, C08L 79/08, //(C08L67/02, 69:00),(C08L67/02,69:00,79:08)

(30) Priority: 23.02.89 US 314447

(43) Date of publication of application: 29.08.90 Bulletin 90/35

(84) Designated Contracting States: DE FR GB IT NL

(71) Applicant: GENERAL ELECTRIC COMPANY
1 River Road
Schenectady New York 12305(US)

(72) Inventor: Liu, Ping Yuan
124 Tanager Court
Naperville, Illinois 60565(US)

(74) Representative: Catherine, Alain
General Electric France Service de Propriété Industrielle 18 Rue Horace Vernet
F-92136 Issy-Les-Moulineaux Cedex(FR)

## (54) Blends of polyesters and high flow polycarbonate.

(57) This invention relates to thermoplastic molding compositions, particularly thermoplastic polyesters, that are blended with a high flow, low molecular weight polycarbonate, said compositions having improved chip resistance.

EP 0 384 138 A2

Xerox Copy Centre

# BLENDS OF POLYESTERS AND HIGH FLOW POLYCARBONATE

This invention relates to thermoplastic molding compositions, particularly thermoplastic polyesters, that are blended with a high flow, low molecular weight polycarbonate, said compositions having improved chip resistance. More particularly, the invention pertains to compositions containing (a) from about 35 % to about 95 % by weight of at least one polyester preferably selected from the group consisting of poly(ethylene terephthalate) and a poly(butylene terephthalate), each polyester comprising 0-100% of the polyester component, and, most preferably a combination of these two polyesters; and (b) from about 5 % to about 65 % by weight of a modified high flow low molecular weight polycarbonate, said weight percentages being based on the total weight of the polyester resins and the polycarbonate resin. The compositions preferably also contain impact modifiers, reinforcing agents, and stabilizers.

## BACKGROUND OF THE INVENTION

High molecular weight polyesters and particularly polyesters and copolyesters of glycols and terephthalic or isophthalic acid have been available for a number of years. These are described inter alia in Whinfield et al, U.S. Pat. No. 2,465,319 and in Pengilly, U.S. Pat. No. 3,047,539. These patents disclose that the polyesters are particularly advantageous as film and fiber-formers.

With the development of molecular weight control, the use of nucleating agents and two-step molding cycles, poly(ethylene terephthalate) has become an important constituent of injection moldable compositions. Further, poly(1,4-butylene terephthalate), because of its very rapid crystallization from the melt, is uniquely useful as a component in such compositions. Work pieces molded from such polyester resins, in comparison with other thermoplastics, offer a high degree of surface hardness and abrasion resistance, high gloss, and lower surface friction.

Furthermore, in particular, poly(1,4-butylene terephthalate) is much simpler to use in injection molding techniques than poly(ethylene terephthalate). For example, it is possible to injection mold poly (1,4-butylene terephthalate) at low mold temperatures to produce highly crystalline, dimensionally stable moldings in short cycle times. On account of the high rate of crystallization, even at low mold temperatures, no difficulty is encountered in removing the molded parts from the molds. Additionally, the dimensional stability of poly-(1,4-butylene terephthalate) injection moldings is very good even at temperatures near or well above the glass temperature of poly(1,4-butylene terephthalate).

It is also known to add various additives, particúlarly other polymers, to thermoplastic polyesters to enhance or provide certain properties. For example, Rein et al, U.S. Pat. No. 3,405,198, disclose the use of polyethylene in poly(ethylene terephthalate) as an impact modifier. Holub et al, U.S. Pat. No. 4,122,061, disclose polyester compositions which comprise a poly(1,4-butylene terephthalate) resin, a poly(ethylene terephthalate) resin, a fibrous glass reinforcement, alone or in combination with a mineral filler and, as an impact modifier therefor, a polyolefin or olefin based copolymer resin including polyethylene and propyleneethylene copolymer. In U.S. 4,115,333, Phipps et al, disclose reinforced compositions comprising a poly (1,4-butylene terephthalate) resin and a second resin of polycarbonate, glass fibers and a small amount of zinc stearate to improve warp resistance. All of the aforementioned patents are incorporated herein by reference.

It has now been unexpectedly discovered that polyesters mixed with minor amounts of a low molecular weight, high flow, polycarbonate resin exhibit an improvement in impact strenght and, in addition, show an improvement in chip resistance. These modified polyesters are preferably also mixed with a third resin to improve impact strength and with reinforcing agents.

## DETAILED DESCRIPTION OF THE INVENTION

The preferred polyesters utilized in the present invention are higher molecular weight polyesters, most preferably linear polymeric glycol esters of terephthalic acid and isophthalic acids. They can be prepared by known techniques such as by the alcoholysis of esters of the phthalic acid with a glycol and subsequent polymerization, by heating glycols with the free acids or with halide derivatives thereof, and similar processes. These are described in U.S. Pat. Nos. 2,465,319 and 3,047,539, and elsewhere. In addition to

the phthalates, amounts, e.g., from about 0.5 to 15% by weight, of other aromatic dicarboxylic acids, such as naphthalene dicarboxylic acid, can be present in the polyester component. Although the term "linear" is used, the reactants can also include amounts of tri- or polyfunctional branching agents, such as trimethylolpropane, pentaerythritol, and trimethyl trimesate.

Preferred polyesters will be of the family consisting of high molecular weight, polymeric glycol terephthalates or isophthalates having repeating units of the general formula:

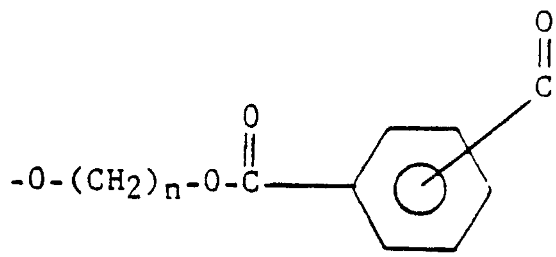

wherein n is a whole number of from 2 to 10, preferably from 2 to 4, and mixtures of such esters, including copolyesters of terephthalic and isophthalic acids of up to about 30 mole % isophthalic units.

Especially preferred polyesters are poly(ethylene terephthalate) and a poly(butylene terephthalate), more preferably poly(1,4-butylene terephthalate), and most preferably a combination of these two resins.

A specific aspect of the present invention is the use, in such polyester compositions, of a high flow polycarbonate resin. Such a polycarbonate will have a very low molecular weight, generally from about 6,000 to about 12,000 number average molecular weight, preferably from about 8,000 to about 10,000. Preferred polycarbonate resins are aromatic polycarbonates that can be produced from a diphenol and phosgene or a phosgene precursor, such as from a dihydroxy diaryl alkane, e.g., bisphenol-A and phosgene or a diester of carbonic acid, e.g., Schnell, et. al., Canadian Patent No. 578,585. The most preferred polycarbonate is a poly(bisphenol A) carbonate. Dihydric phenols which are suitable for use in the preparation of the polycarbonates used in the present invention are disclosed in U.S. Patent Nos. 2,999,835; 3,038,365; 3,334,154; and 4,131,575. The polycarbonates of the subject blends can be manufactured by known processes, such as, for example, by reacting a dihydric phenol with a carbonate precursor such as set forth in U.S. Patent Nos. 4,018,750 and 4,123,436 or by transesterification processes such as are disclosed in U.S. Patent No. 3,153,008, all of the foregoing patents incorporated herein by reference. The lower molecular weight, high flow polycarbonate resin which is of particular use in the present invention is achieved among several methods by using more chainstopper compound, thereby decreasing the average chain length of polycarbonate. Such chainstoppers include monophenolic compounds as phenol, p-tertiarybutyl phenol and the like as well as the larger molecules such as paracumyl and Chroman-I. Although most of the typical values for properties of polycarbonate of high molecular weight are achieved, it has been discovered that the high flow polycarbonate utilized in the present invention is somewhat brittle, as measured by 1/8 inch Notched Izod, ASTM 256, which is reduced substantially, as compared to higher molecular weight polycarbonates, to about 1-2 ft.-lbs./in from about 15-16 ft.-lbs..in. Thus, it is completely unexpected that the use of such polycarbonates having a lower molecular weight would result, in predominately polyester compositons having an improved impact strenght, as measured by Izod impact tests, and an improved resistance to chipping.

The compositions of the present invention can also contain, as an impact modifying additive, a minor amount of one or more other polymeric materials which are compatible with the polyester-polycarbonate resinous blend. One such preferred material is a polyetherimide ester resin. Such polyetherimide ester resins are well known in the art and contain imide groups, polyester groups, and ester groups in the polymer chain. They are comprised of the reaction products of: (i) at least one diol; (ii) at least one dicarboxylic acid or its ester forming reactive derivative; and (iii) a set of reactants selected from (a) (1) at least one high molecular weight poly(oxy alkylene)diamine, and (2) at least one tricarboxylic acid or its derivative, or (b) at least one high molecular weight polyoxyalkylene diimide acid. Suitable diols (i) for use in the preparation of these polyetherimide ester polymers include the saturated and unsaturated aliphatic and cycloaliphatic dihydroxy compounds as well as the aromatic dihydroxy compounds. These diols are preferably of a low molecular weight, i.e., having a molecular weight of about 300 or less. When used herein, the term "diol" and "low molecular weight diol" should be construed to include equivalent ester forming derivatives thereof provided, however, that the aforementioned molecular weight requirement pertains to the diols only and not to their ester forming derivatives. Exemplary of ester forming derivatives

of diols there may be given the acetates of the diols as well as, for example, ethylene oxide or ethylene carbonate for ethylene glycol.

The preferred saturated and unsaturated aliphatic and cycloaliphatic diols are those having from 2 to about 15. carbon atoms. Exemplary of these diols there may be given ethylene glycol, propanediol, butanediol, pentanediol, 2-methyl propanediol, 2,2-dimethyl propanediol, hexanediol, decanediol, 1,2-, 1,3-, and 1,4- cyclohexane dimethanol, butenediol, hexenediol, etc. Especially preferred are 1,4-butanediol and mixtures thereof with hexanediol, 1,4-cyclohexane dimethanol, or butenediol, most preferably 1,4-butanediol.

Aromatic diols suitable for use in the preparation of such polyetherimide esters are generally those having from 5 to about 15 carbon atoms.

Especially preferred diols are the saturated aliphatic diols, mixtures thereof, and mixtures of a saturated diol(s) with an unsaturated diol(s), wherein each diol contains from 2 to about 8 carbon atoms.

Dicarboxylic acids (ii) which are suitable for use are aliphatic, cycloaliphatic, and/or aromatic dicarboxylic acids. These acids are preferably of a low molecular weight, i.e., having a molecular weight of less than about 300. However, in some cases higher molecular weight dicarboxylic acids may be used. The term "dicarboxylic acids" as used herein, includes equivalents of dicarboxylic acids having two functional carboxyl groups which perform substantially like dicarboxylic acids in reaction with glycols and diols in forming polyesters. These equivalents include esters and ester forming reactive derivatives, such as acid halides and anhydrides. The molecular weight preference mentioned above pertains to the acid and not to its equivalent ester or ester-forming derivatives. Additionally, the dicarboxylic acids may contain any substituent group(s) or combinations which do not substantially interfere with the polymer formation and use of the polymer. Aliphatic dicarboxylic acids, as the term is used herein, refers to carboxylic acids having two carboxyl groups each of which is attached to a saturated carbon atom. If the carbon atom to which the group is attached is saturated and is in a ring, the acid is cycloaliphatic. Aromatic dicarboxylic acids, as the term is used herein, are dicarboxylic acids having two carboxyl groups, each of which is attached to a carbon atom in an isolated or fused benzene ring system. It is not necessary that both functional carboxyl groups be attached to the same aromatic ring and where more than one ring is present, they can be joined by aliphatic or aromatic divalent radicals such as -O- or $-SO_2-$. Preferred aliphatic acids are cyclohexane dicarboxylic acids, sebacic acid, glutaric acid and adipic acid.

Preferred dicarboxylic acids for the preparation of the polyetherimide esters are the aromatic dicarboxylic acids, mixtures thereof and mixtures of one or more dicarboxylic acids with an aliphatic and/or cycloaliphatic dicarboxylic acid, most preferably the aromatic dicarboxylic acids. Among the aromatic acids those with 8-10 carbon atoms are preferred, particularly the benzene dicarboxylic acids, i.d., phthalic, terephthalic and isophthalic acids and their dimethyl derivatives. Especially preferred is dimethylterephthalate.

Finally, where mixtures of dicarboxylic acids are employed, it is preferred that at least about 60 mole %, preferably at least 80 mole %, based on 100 mole % of dicarboxylic acid (ii) be the same dicarboxylic acid or ester derivative thereof. As mentioned above, the preferred compositions are those in which dimethylterephthalte is the predominant dicarboxylic acid, most preferable when dimethylterephthalte is the only dicarboxylic acid.

These polyetherimide ester polymers may be prepared by a one-pot synthesis involving the reaction of the diol (i), the dicarboxylic acid (ii), the high molecular weight poly(oxy alkylene)diamine (iii)(a)(1), and the tricarboxylic acid or its derivative (iii)(b). In such a synthesis the polyoxyalkylene diimide diacid (iii)(b) is formed in-situ by the reaction of the poly(oxy alkylene)diamine with the tricarboxylic acid).

The poly(oxy alkylene)diamines (iii)(a)(1) suitable for use may be represented by the following general formula

I. $H_2N-G-NH_2$

wherein G is the radical remaining after the removal of the amino groups of a long chain alkylene ether diamine. These polyether diprimary diamines are available commercially from Texaco Chemical Company under the trademark JEFFAMINE. In general they are prepared by known processes for the animation of glycols, as set forth in Belgium Pat No. 634,741, and U.S. Patent No. 3,654,370. Other methods for the production thereof include those taught by U.S. Patent Nos. 3,155,728 and 3,236,895 and French Nos. 1,551,605 and 1,466,708, all of the foregoing patents being incorporated herein by reference.

The long chain ether diamines suitable for use herein are the polymeric diamines having terminal (or as nearly terminal as possible) amine groups and an average molecular weight of from about 600 to about 12,000, preferably from about 900 to about 4,000. Additionally, the long chain ether diamines will generally have a carbon-to-oxygen ratio of from about 1.8 to about 4.3.

Representative long chain ether diamines are the poly(alkylene ether)diamines; random or block copolymers of ethylene oxide and propylene oxide; terminated poly(ethylene ether)diamine; and aminated

random or block copolymers of tetrahydrofuran with minor amounts of a second monomer such as ethylene oxide, propylene oxide, and methyl tetrahydrofuran (used in proportions such that the carbon-to-oxygen mole ratio in the diamine does not exceed about 4.3 to 1). Especially preferred poly(alkylene ether) diamines are poly(propylene ether diamine, poly tetramethylene ether) diamine, and the poly(ethylene)-glycols which are end-capped with poly(propylene ether) and/or propylene oxide and subsequently aminated.

In general, the polyoxyalkylene diamines useful have an average molecular weight of from about 600 to about 12,000, preferably from about 900 to about 4,000.

The tricarboxylic acid (iii) (a) (2) may be almost any carboxylic acid anhydride containing an additional carboxylic group or the corresponding acid thereof containing two imide-forming vicinal carboxyl groups in lieu of the anhydride group. Mixtures thereof are also suitable. The additional carboxylic group must be esterifiable.

While trimellitic anhydride is preferred as the tricarboxylic acid component, any number of suitable tricarboxylic acid constituents will occur to those skilled in the art. Suitable tricarboxylic acid materials can be characterized by the following general formula

II. 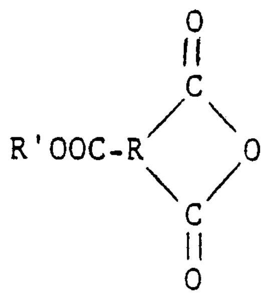

wherein:

R is a trivalent organic radical, preferably a $C_1$-$C_{20}$ aliphatic or cycloaliphatic, or $C_6$-$C_{20}$ aromatic trivalent radical;

R′ is preferably hydrogen or a monovalent organic radical which is preferably selected from $C_1$-$C_6$ aliphatic and/or cycloaliphatic radicals and $C_6$-$C_{12}$ aromatic radical, e.g., benzyl; R′ is most preferably hydrogen.

In the preparation of the instant polyetherimide ester polymers, sufficient amounts of diol versus dicarboxylic acid, and tricarboxylic acid versus diamine must be present, as recognized in the art, to allow for substantially complete polymerization.

This type of one-pot reaction involving the reactions of (i) a diol component, (ii) a dicarboxylic acid component, (iii) (a) (1) a poly(oxy alkylene)diamine component, and (iii) (a) (2) a tricarboxylic acid component is described in U.S. Patent No. 4,556,688 to McCready at al. incorporated herein by reference. In this type of one-pot reaction the amount of diol (i) employed will be, in general, a molar excess, preferably about 1.5 molar equivalents, based on the combined molar equivalents of diicarboxylic acid (ii) and of the total moles of the tricarboxylic acid (iii) (a) (2). The amount of the tricarboxylic acid employed will preferably be about two molar equivalents based on the number of moles of the poly(oxy alkylene)diamine. Obviously, less than two molar equivalents would result in incomplete imidization of the diamine resulting in potentially poorer properties. Conversely, greater than two molar equivalents of the tricarboxylic acid may lead to cross-linking and/or branching of the polymer. Generally, mole ratios of 2 moles tricarboxylic acid to 0.85 to 1.15 moles of poly(oxy alkylene)diamine yield useful polymers.

The amount by which the diamine (iii) (a) (1) and the dicarboxylic acid (ii) are used is generally not critical in forming the polyetherimide esters. However, preferred amounts of the poly(oxy alkylene) diamine and dicarboxylic acid used are such that the weight ratio of the theoretical amount of the polyoxyalkylene diimide diacid, formable from the poly(oxy alkylene)diamine and the tricarboxylic acid, to the dicarboxylic acid is from about 0.002 to 2.0:1, preferably from about 0.01 to 2.0:1, and more preferably from about 0.25 to 2.0:1, and most preferably from about 0.4 to 1.4:1. The actual weight ratio will be dependent upon the specific poly(oxy alkylene)diamine and tricarboxylic acid used and more importantly upon the desired physical and chemical properties of the resultant polyetherimide ester.

The polyetherimide esters may also be prepared by a two-pot synthesis involving the reaction of the diol(i), the dicarboxylic acid (ii), and the polyalkylene diimide diacid (iii) (b). Such a reaction is described in

U.S. Patent No. 4,556,705 to McCready, incorporated herein by reference.

The polyoxyalkylene diimide diacid (iii) (b) may be represented by the general formula

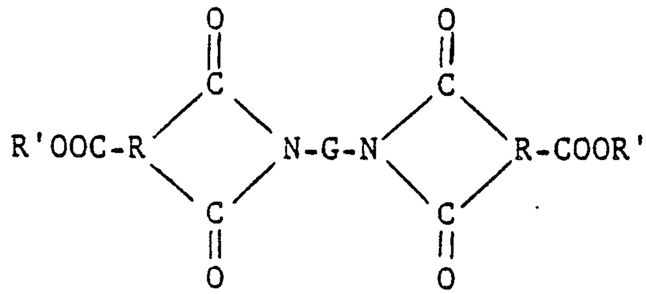

wherein G, R and R′ are as defined hereinbefore. The polyoxyalkylene diimide diacids of Formula II suitable for use herein are high molecular weight diimide diacids having an average molecular weight greater than about 700, preferably greater than about 900. These polyoxyalkylene diimide diacids and processes for their preparation are disclosed in U.S. Patent No. 4,556,705, incorporated herein by reference.

It is also possible, as described in U.S. Patent No. 4,556,688, to prepolymerize the aromatic dicarboxylic acid and the diol to form a prepolyester, and then react this prepolyester with either the diimide diacid or with the tricarboxylic acid and the poly(oxy alkylene)diamine. Forming the prepolyester can be achieved by conventional esterification techniques such as those described in U.S. Patent Nos. 2,465,319 and 2,910,466, all of which are incorporated herein by reference.

In its preferred embodiment, the polyetherimide esters comprise the reaction products of dimethylterephthalate, optionally with up to 40 mole percent of another dicarboxylic acid or its ester forming derivative; butane diol, optionally with another diol such as butene diol, hexanediol, or cyclohexane dimethanol; and either a poly(oxy alkylene)diamine having an average molecular weight of from about 600 to about 12,000, preferably from about 900 to about 4,000, and trimellitic anhydride, or a polyoxyalkylene diimide diacid.

The polyetherimide esters may be prepared by conventional esterification/condensation reactions for the production of polymers. These processes are described, inter alia, in U.S. Patents Nos. 3,763,109; 3,651,014; 3,801,547; 4,556,705, and 4,556,688, all of which are incorporated herein by reference.

The polyetherimide esters contain at least the following two recurring structural units;

IV.– $(\text{-O-}\overset{\overset{\text{O}}{\|}}{\text{C}}\text{-A-}\overset{\overset{\text{O}}{\|}}{\text{C}}\text{-O-R}^1\text{-})$ , and

V. $(\text{-O-}\overset{\overset{\text{O}}{\|}}{\text{C}}\text{-R}^2\text{-}\overset{\overset{\text{O}}{\|}}{\text{C}}\text{-O-R}^1\text{-})$

wherein:

A is the residue of the polyoxyalkylene diimide diacid absent the two carboxyl groups, i.e.,

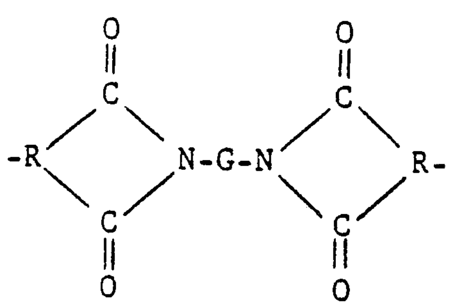

$R^1$ is the residue of the diol absent the two hydroxyl groups,

$R^2$ is the residue of the dicarboxylic acid absent the two carboxyl groups, and

G is as defined hereinbefore.

Additionally, while not required, it is customary and preferred to utilize a catalyst or catalyst system in the process for the production of the polyetherimide esters. These types of catalysts are set forth in U.S. Patent Nos. 4,556,705 and 4,566,683, both of which are incorporated herein by reference.

Both batch and continuous methods can be used for any stage of the ether imide ester polymer

preparation.

The composition of the present invention can also contain, as a modifying agent, at least one acrylate polymer or copolymer. An acrylate polymer preferably employed in the present invewntion is a copolymer of a $C_{1-5}$ methacrylate and a $C_{1-5}$ acrylate, wherein the term "$C_{1-5}$"represents both saturated and unsaturated, straight or branched chained aliphatic hydrocarbon radicals having from 1 to 5 carbon atoms.

Preferred acrylates for use in the acrylate copolymer are methyl acrylate, ethyl acrylate isobutyl acrylate, 1,4-butanediol diacrylate, n-butyl acrylate, and 1,3-butylene diacrylate. Preferred methacrylates for use in the copolymer include methyl methacrylate, isobutyl methacrylate, 1,3-butylene dimethacrylate, butyl methacrylate and ethyl methacrylate.

Based on the total weight of the copolymer, the acrylate portion thereof can range from about 50-85 weight percent and the methacrylate portion thereof can range from about 15-50 weight percent.

The preferred acrylate copolymer for use in this invention is a copolymer of n-butyl acrylate and methyl methacrylate wherein the weight ratio of n-butyl acrylate: methyl methacrylate is about 3.2.

Suitable acrylate polymers can be prepared by methods well known to those skilled in the art or can be obtained commercially. For example, Rohn and Haas' Acryloid® KM 330 copolymer of n-butyl acrylate and methyl methacrylate, is suitable for use in the present invention, as is Rohm and Haas' Paraloid® EXL-2330 butyl acrylate based acrylate.

The acrylate polymer can also be an olefin-acrylate copolymer which is a copolymer of a $C_2$-$C_5$ olefin and a $C_1$-$C_5$ acrylate. The term "$C_1$-$C_5$" is as defined above, and the term "$C_2$-$C_5$" represents a straight or branched chain aliphatic hydrocarbon radical having from 2 to 5 carbon atoms. The preferred olefins are ethylene, propylene and isobutylene. Preferred acrylates which are utilized in the olefin-acrylate copolymer are ethyl acrylate, 1,3-butylene diacrylate, methyl acrylate, 1,4-butanediol diacrylate and isobutyl acrylate.

The acrylate portion of the olefin-acrylate copolymer, based on the total weight of the copolymer, can range from about 10 to about 30 weight percent. The olefin portion of the copolymer can range from about 70 to about 90 weight percent.

The preferred olefin acrylate copolymer for use in this invention as a reinforcing agent, alone or in combination with other acrylates, is an ethylene-ethyl acrylate (EEA) copolymer, in which the weight ratio of the ethylene fraction to the ethyl acrylate fraction is about 3.5 to 1 to about 4.5 to 1.

Suitable olefin-acrylate copolymers, as defined above, can be prepared by methods well known to those skilled in the art or can be obtained commercially. For example, Union Carbide's Bakelite® DPD-6169 ethylene ethyl acrylate copolymer is suitable for use in the present invention.

It should be understood that the composition obtained according to this invention may contain one or more conventional additives such as, for example, antioxidants, carbon black, reinforcing agents, plasticizers, lubricity promoters, color stabilizers, ultraviolet absorbers, X-ray opacifiers, dyes, pigments, fillers, mold release agents and the like. Satisfactory thermal, oxidative and/or ultraviolet stabilizers comprise phenols and their derivatives, amines and their derivatives, compounds containing both hydroxyl and amine groups, hydroxyazines, oximes, polymeric phenolic esters and salts of multivalent metals in which the metal is in its lower state.

Representative phenol derivatives useful as stabilizers include 3,5-di-tert-butyl-hydroxy hydrocinnamic triester with 1,3, 5-tris-(2-hydroxyethyl-s-triazine-2,4,6-(1H, 3H, 5H) trione; 4,4′-bis-(2,6-ditertiarybutylphenol); 1,3,5-trimethyl-2,4,6-tris-(3,5-ditertiary-butyl-4-hydroxylbenzyl)benzene and 4,4′-butylidene-bis (6-tertiary-butyl-m-cresol). Various inorganic metal salts or hydroxides can be used as well as organic complexes such as nickel dibutyl dithiocarbamate, manganous salicylate and copper 3-phenylsalicylate. Typical amine stabilizers include N,N′-bis(betanaphthyl)-p-phenylenediamine; N,N′-bis-(1-methylheptyl)-p-phenylenediamine and either phenyl-beta-napththyl amine or its reaction products with aldehydes. Mixtures of hindered phenols with esters or thiodipropionic, mercaptides and phosphite esters are particularly useful. Additional stabilization to ultraviolet light can be obtained by compounding with various UV absorbers such as substituted benzophenones and/or benzotriazoles.

Particularly useful stabilizers are hindered phenols which include phenols of the formula

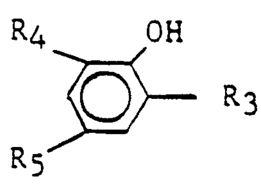

wherein $R_3$ and $R_4$ are hydrocarbon groups having from one to about 20 carbon atoms, and $R_5$ is a

hydrogen atom or a hydrocarbon group having from one to about 20 carbon atoms, and bisphenol of the formula

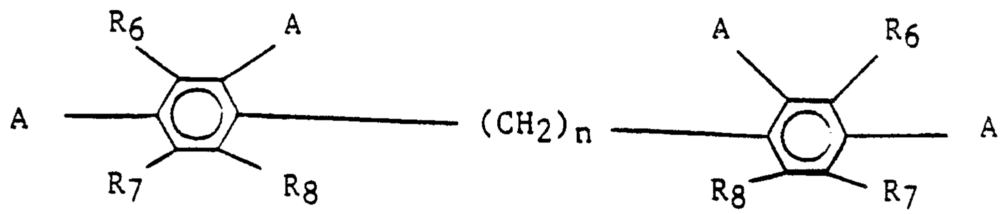

wherein $R_6$, $R_7$ and $R_8$ are each a hydrogen atom or a hydrocarbon group having from one to about 20 carbon atoms, one of the two A's on each ring is a hydroxyl group and the other A on each ring is a hydrogen atom or a hydrocarbon group having from one to about 20 carbon atoms; and n is an integer of from 0 to about 20.

Preferred hindered phenols useful in this invention include 2,6-di-tert-butyl-4-methyl-phenol, commonly known as BHT (sold under the tradename Ionol® by Shell Chemical Co.); 4,4-methylene bis(2,6-di-tert-butylphenol) and 2,6-di-tert-butyl-4-n-butylphenol (sold under the tradename Ethyl 702 and Ethyl 744, respectively, by Ethyl Corp.); and tetrakis[methylene 3-(3′,5′-di-tert-butyl-4′-hydroxyphenyl) proprionate]-methane and stearyl-3-(3′,5′-ditertbutyl-4′-hydroxyphenyl) proprionate (sold under the tradenames Irganox 1010 and Irganox 1076, respectively, by Ciba-Geigy).

The composition of the present invention will preferably include reinforcing agents such as fibrous (filamentous) glass and/or fillers, such as mineral fillers such as clay, talc and the like, preferably mica. The fillers can be untreated or treated with silane or titanate coupling agents, etc. The preferred reinforcing agent for use in the present invention is filamentous glass, which is is well known to those skilled in the art and is widely available from a number of manufacturers. For compositions ultimately to be employed for electrical uses, it is preferred to use fibrous glass filaments comprised of lime-aluminum borosilicate glass that is relatively soda free. This is known as "E" glass. However, other glasses are useful where electrical properties are not so important, e.g., the low soda glass known as "C" glass. The filaments are made by standard processes, e.g., by steam or air blowing, flame blowing and mechanical pulling. The preferred filaments for plastic reinforcements are made by mechanical pulling. The filament diameters range from about 0.00012 to 0.00075 inch, but this is not critical to the present invention. The length of the glass filaments is also not critical to the invention. However, in preparing the molding compositions, it is convenient to use the filamentous glass in the form of chopped strands of from about one-eighth to about two inches long. In articles molded from the compositions, on the other hand, even shorter lengths will be encountered because, during compounding considerable fragmentation will occur. This is desirable, however, because the best properties are exhibited by thermoplastic injection molded articles in which the filament lengths lie between about 0.0005 to 0.250 inch.

The compositions of the present invention will preferably contain (a) from about 35 % to about 95 % by weight of at least one polyester preferably selected from the group consisting of poly(ethylene terephthalate) and a poly(butylene terephthalate), each polyester comprising 0-100% of the polyester component, and, most preferably a combination of these two polyesters; and (b) from about 5 % to about 65 % by weight of a modified high flow low molecular weight polycarbonate, said weight percentages being based on the total weight of the polyester resins and the polycarbonate resin.

The specific additives utilized in the polyester-polycarbonate blend will depend upon the end use desired for the composition of the present invention. The amounts of such additives utilized will also depend upon the desired end use along with the type and amounts of polyester resin(s) and polycarbonate resin employed in the composition.

Any amount of modifying resin, such as an acrylate polymer or polyetherimide ester elastomer, reinforcing agent and/or filler will serve to modify the properties of the polyester-polycarbonate resin blend. Preferably, however, from about 5 parts to about 25 parts by weight, add-on, of at least one modifying resin is to be employed, based on 100 parts by weight of the polyester and polycarbonate components in the end composition; from about 10 parts to about 50 parts by weight, add-on, of at least one reinforcing agent, such as glass fibers, is to be employed, based on 100 parts by weight of the polyester and polycarbonate components in the end composition; and from about 10 parts to about 50 to about parts by weight, add-on, of at least one filler is to be employed, based on 100 parts by weight of the polyester and polycarbonate components in the end composition.

The components of the composition of the present invention can be intimately blended in a number of

procedures. In one way, the various additives to the polyester resin(s) are put into an extrusion compounder with the dry polyester resin(s) and the blend is heated at an elevated temperature, e.g., 450°-550° F., and extruded to produce molding pellets. In another procedure, the additives are mixed with the polyester resin(s) by blending at ordinary temperatures, then the blend is fluxed on a mill, heated, e.g., at 450°-550° F., then cooled and comminuted; or the blend can be extruded at 450°-550° F., cooled and chopped. The additives are mixed with the powdered or granular polyester(s) and the mixture can be heated and directly formed into blow molded items using machines which compound and mold.

## DESCRIPTION OF THE PREFERRED EMBODIMENT

The following examples are presented to more fully and clearly illustrate the present invention. They are presented as illustrative of the invention and are not to be construed as limiting the invention thereto. In the examples all parts and percentages are on a weight basis unless otherwise specified.

The following Example 1 illustrates a composition following outside the scope of the instant invention in that it does not contain any high flow, low molecular weight polycarbonate. This example is presented for comparative purposes only.

In all the examples, the compositions were prepared by melt blending the polyester resins and the indicated additional components as set forth in Table 1 below using a Prodex single screw extruder at approximately 470° F. The resulting polymeric composition was formed, by injection molding, into test specimens of the size described in the corresponding ASTM methods. The notched izod and other properties of the compositions were tested with the results of these tests set forth in Table II below.

The following ASTM methods were used in determining the physical characteristics of the compositions:

| | |
|---|---|
| Flexural Property | ASTM D790 |
| Tensile Property | ASTM D638 |
| Izod Impact Strength | ASTM D256 |
| Chip Resistance | ASTM D1370 |
| Shrinkage | ASTM D955 |

TABLE I

| | EXAMPLE NO. | | |
|---|---|---|---|
| | 1 | 2 | 3 |
| PBT | 29.85 | 24.85 | 29.85 |
| PET | 20.0 | 20.0 | 20.0 |
| Glass Fiber | 20.0 | 20.0 | 20.0 |
| Mica | 20.0 | 20.0 | 10.0 |
| STAB | 0.15 | 0.15 | 0.15 |
| PEE | 10.00 | 10.0 | --- |
| HFPC | --- | 5.0 | 10.0 |
| Acrylate Copolymer | --- | --- | 10.0 |

PBT is poly (1,4 butylene terephthalate) resin from General Electric Company (Valox®295).

HFPC is a high flow bisphenol A polycarbonate resin from General Electric Company having an average molecular weight of about 9,000.

STAB is a hindered phenolic stabilizer, Irganox 1076.

PET is poly(ethylene terephthalate) resin.

PEE is a polyetherimide ester elastomer, Lomod® J10 from the General Electric Company.

The acrylate copolymer utilized was a 80:20

weight ratio of EXL-2330 to EEA.

TABLE II

| | EXAMPLE NO. | | |
|---|---|---|---|
| PROPERTIES | 1 | 2 | 3 |
| Notched Izod, ft.-lbs./in. | 1.30 | 1.31 | 2.00 |
| Unnotched Izod, ft.-lbs./in. | 9.60 | 10.16 | 12.76 |
| Tensile Elongation, % | 9.30 | 8.80 | 10.80 |
| Tensile Strength, psi | 13,770 | 13,710 | 12,410 |
| Flexural Strength, psi | 21,980 | 21,800 | 20,310 |
| Flexural Modulus, MM psi | 1.18 | 1.13 | 0.91 |
| Shrinkage (with/against flow), mil/in. | 5.0/6.2 | 4.3/5.2 | 3.8/4.2 |
| Chip Resistance Rating | 5C | 6C | 6B |
| No. of chips in the specimen | 25-49 | 10-24 | 10-24 |
| Size of chips in the specimen | 3-6mm | 3-6mm | 1-3mm |

The above data indicates the improvement in the physical properties, especially the chip resistance, of polyester that is already compounded with impact modifiers, when a low molecular weight polycarbonate is added thereto.

Obviously, other modifications and variations of the present invention are possible in light of the above teachings. It is therefore to be understood that changes may be made in the particular embodiments of the invention described which are within the full intended scope of the invention as defined by the appended claims.

## Claims

1. A thermoplastic composition having improved chip resistance comprising:
(a) at least one polyester resin; and
(b) a low molecular weight polycarbonate resin.

2. The composition of Claim 1 wherein the at least one polyester resin is a high molecular weight linear thermoplastic polyester resin selected from the group consisting of polymeric glycol terephthalate and isophthalate esters having repeating units of the general formula:

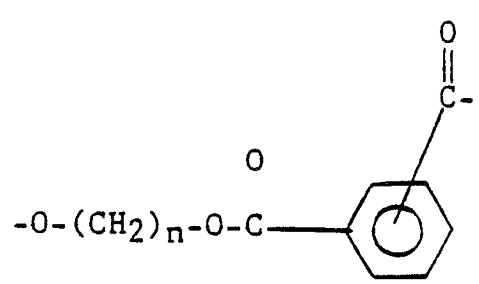

wherein n is a whole number of from 2 to 10, or a mixture of such esters.

3. The composition as defined in claim 2 wherein the polyester resin is a poly (butylene terephthalate) ester.

4. The composition as defined in claim 3 wherein the polyester resin is poly(1,4-butylene terephthalate).

5. The composition as defined in claim 2 wherein the polyester resin is poly(ethylene terephthalate) ester.

6. The composition of claim 2 wherein the at least one polyester resin is a mixture of poly(1,4-butylene terephthalate) and poly(ethylene terephthalate) ester resins.

7. The composition of claim 1 wherein the number molecular weight of the polycarbonate resin ranges from about 6,000 to about 12,000.

8. The composition of claim 7 wherein the number molecular weight of the polycarbonate resin ranges from about 8,000 to about 10,000.

9. The composition of claim 1 wherein said polycarbonate resin is an aromatic polycarbonate resin.

10. The composition of claim 9 wherein said aromatic polycarbonate resin is derived from a diphenol and phosgene or a phosgene precursor.

11. The composition of claim 10 wherein said polycarbonate resin is poly(bisphenol A) carbonate.

12. The compositions of claim 1 which contains (a) from about 35 % to about 95 % by weight of said at least one polyester; and (b) from about 5 % to about 95 % by weight of said low molecular weight polycarbonate, said weight percentages being based on the total weight of the polyester resins and the polycarbonate resin.

13. The composition of Claim 1 further comprising a modifying amount of a polyetherimide ester resin.

14. The composition of claim 13 wherein said polyetherimide ester resin is comprised of the reaction products of:

(a) at least one diol;

(b) at least one dicarboxylic acid or its ester forming reactive derivative thereof; and

(c) a set of reactants selected from

(1) (i) at least one high molecular weight poly(oxy alkylene)diamine, and (ii) at least one tricarboxylic acid or a derivative thereof; or

(2) at least one high molecular weight polyoxyalkylene diimide diacid.

15. The composition of claim 14 wherein said diol is a low molecular weight diol.

16. The composition of claim 15 wherein said diol is selected from butanediol, butenediol, hexanediol, cyclohexane dimethanol, or mixtures thereof.

17. The composition of claim 14 wherein said dicarboxylic acid or its derivative is an aromatic dicarboxylic acid or its derivative.

18. The composition of claim 14 wherein (c) is (1).

19. The composition of claim 18 wherein said high molecular weight poly(oxy alkylene) diamine is represented by the formula

$H_2N\text{-}G\text{-}NH_2$

wherein G is the radical remaining after the removal of the amino groups of a long chain alkylene ether diamine.

20. The composition of claim 18 wherein said tricarboxylic acid or its derivative is represented by the formula

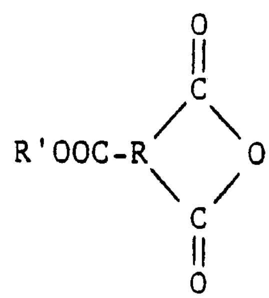

wherein:

R is a $C_1$ to $C_{20}$ trivalent aliphatic, cycloaliphatic, cr aromatic radical;

R′ is hydrogen or a $C_1$ to $C_6$ aliphatic monovalent radical.

21. The composition of claim 14 wherein (c) is (2).

22. The composition of claim 21 wherein said high molecular weight polyoxyalkylene diimide diacid is represented by the formula

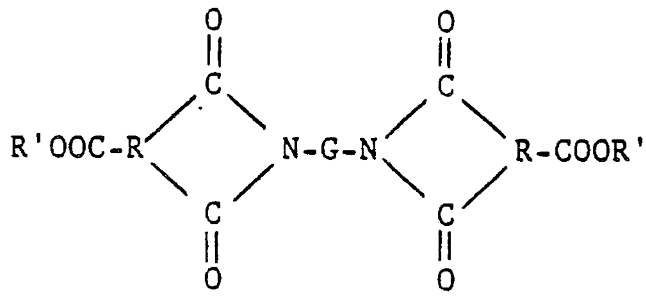

wherein:

each R is independently selected from $C_1$ to $C_{20}$ aliphatic, cycloaliphatic, or aromatic trivalent organic radicals;

each R′ is indepently selected from hydrogen, $C_1$ to $C_6$ aliphatic or cycloaliphatic organic radicals, or $C_6$-$C_{12}$ aromatic monovalent organic radicals; and

G is the radical remaining after the removal of the amino groups of-a long chain alkylene ether diamine.

23. The composition of claim 13 wherein said polyetherimide ester resin is comprised of at least the following recurring structural units:

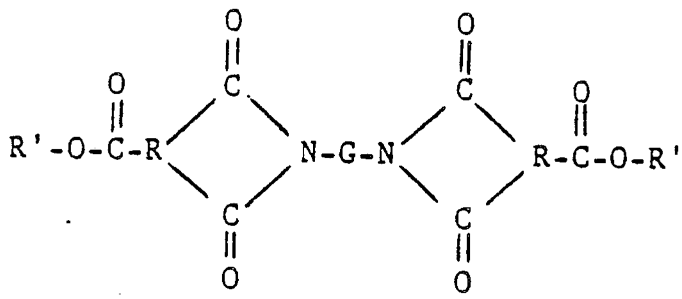

and

$-O-\overset{\overset{O}{\|}}{C}-R^2-\overset{\overset{O}{\|}}{C}-O-R^1-$wherein:

R is the residue of a diol absent the two hydroxyl groups;

$R^1$ is the residue of a dicarboxylic acid absent the two carboxyl groups;

$R^2$ is a trivalent organic radical; and

G is the radical remaining after the removal of the amino groups of a long chain poly(oxy alkylene) diamine.

24. The composition of claim 1 which further contains an effective stabilizing amount of at least one thermal stabilizer.

25. The composition of claim 1 which further contains a filler.

26. The composition of claim 25 wherein the filler is mica.

27. The composition of claim 1 which further contains an effective reinforcing amount of at least one reinforcing agent.

28. The composition of claim 27 wherein the reinforcing agent is glass fibers.